Europäisches Patentamt

European Patent Office

Office européen des brevets

(11) Veröffentlichungsnummer: **0 331 611**
**A2**

## (12) EUROPÄISCHE PATENTANMELDUNG

(21) Anmeldenummer: **89710013.7**

(22) Anmeldetag: **02.03.89**

(51) Int. Cl.⁴: **B 01 D 53/04**
**C 23 G 5/00**

(30) Priorität: **02.03.88 DE 3806610**

(43) Veröffentlichungstag der Anmeldung:
**06.09.89 Patentblatt 89/36**

(84) Benannte Vertragsstaaten:
**AT BE CH DE ES FR GB GR IT LI LU NL SE**

(71) Anmelder: **OTTO OEKO-TECH GMBH & CO. KG**
**Konrad-Adenauer-Strasse 25**
**D-5000 Köln 50 (DE)**

(72) Erfinder: **Golde, Ernst**
**Grönkesdyk 12**
**D-4150 Krefeld (DE)**

**Mathews, Waldemar, Dr.**
**Am Schwarzwasser 2**
**D-5010 Bergheim (DE)**

**Schweitzer, Stefan**
**Schömkensweg 28**
**D-4050 Mönchengladbach 1 (DE)**

(74) Vertreter: **Patentanwaltsbüro Cohausz & Florack**
**Schumannstrasse 97**
**D-4000 Düsseldorf 1 (DE)**

(54) **Anlage zum Reinigen von Werkstücken.**

(57) Die vorliegende Erfindung betrifft eine Anlage zum Reinigen von Werkstücken mittels Lösemittels in einem Behandlungsraum 14 unter gleichzeitiger Rückgewinnung der Lösemittel bestehend aus einem Spülgaskreislauf, in dem der Behandlungsraum 14, ein Kondensator 6, 7, 8 zum Abscheiden des im Spülgasstrom enthaltenden Lösemittels, ein mit Molekularsieb gefüllter Adsorber 3 und ein Gasaufheizer 13 liegen, wobei der Adsorber 3 bezogen auf die Strömungsrichtung des Spülgases in der Adsorptionsphase hinter dem Kondensator 6, 7, 8 und vor dem Gasaufheizer 13 angeordnet ist.

Fig. 1

EP 0 331 611 A2

**Beschreibung**

## Anlage zum Reinigen von Werkstücken

Die vorliegende Erfindung betrifft eine Anlage zum Reinigen von Werkstücken, insbesondere Trockenreinigungsmaschinen, Metallentfettungsanlagen, Anlagen zum Reinigen von elektronischen Leiterplatten und ähnliche Anlagen, mittels Lösemitteln unter gleichzeitiger Rückgewinnung dieser Lösemittel.

Aus der europäischen Patentanmeldung 0215472 (= DE 3533313) ist eine Vorrichtung bekannt, mit deren Hilfe flüchtige Lösungsmittel aus wasserdampfhaltiger Abluft entfernt werden können. Die in dieser Anmeldung genannte Vorrichtung besteht aus zumindest einem Behälter mit Wasserdampf adsorbierender Molekularsiebpackung und zumindest einem weiteren Behälter mit Lösungsmittel adsorbierender Molekularsiebpackung. Bei dieser Anlage wird die Abluft zunächst durch eine den Wasserdampf und anschließend durch eine ausschließlich die Lösungsmitteldämpfe adsorbierende Molekularsiebpackung durchgeleitet. Die beiden Molekularsiebpackungen werden durch Erhitzen mittels Luft oder Inertgas regeneriert. Die ausschließlich Wasserdampf adsorbierende Molekularsiebpackung wird zur Atmosphäre hin und die ausschließlich Lösemitteldämpfe adsorbierende Molekularsiebpackung in einem geschlossenen Kreislauf regeneriert. Innerhalb des geschlossenen Kreislaufes werden die Lösemitteldämpfe in einem Kondensationswärmeaustauscher kondensiert und aufgefangen und zur Wiederverwendung zurückgeführt. Nachteilig bei diesem Verfahren ist, daß die Abkühlung des mit flüchtigen Lösemitteln beladenen Regenerationsgases sehr schnell und fortwährend erfolgt. Infolgedessen wird auch bei Betriebszuständen, bei denen nichts kondensiert werden kann, weiter gekühlt. Die Folge ist ein erhöhter Energieverbrauch. Ein weiterer Nachteil besteht darin, daß in die Anlage durch die Luftfeuchtigkeit immer ein gewisser Anteil von Wasser gelangt. Darüber hinaus kommt der Adsorber mit relativ hohen Konzentrationen an Lösemitteln in Berührung. Ferner eignet sich die geschilderte Anlage nach dem Stand der Technik im wesentlichen nur zur Entfernung von Lösemitteln, die in der Abluft vorhanden sind. Daher werden bei diesem Verfahren nur relativ leicht flüchtige Lösemittel entfernt.

Aus der DE-OS 37 06 073 ist ein Verfahren zur Rückgewinnung organischer Lösungsmittel in eine Anlage für die chemische Reinigung bekannt. Bei diesem Verfahren wird Zirkulationsluft über mit Lösemitteln behandelte Textilien geleitet. Das in der Zirkulationsluft enthaltene Lösungsmittel wird in einem Luftkühler kondensiert und dann in einem Adsorber adsorbiert. Gleichzeitig mit der Luftzirkulation durch die Waschtrommel, das Filter, den Luftkühler und den Lufterhitzer erfolgt auch die Desorption aus dem Desorptionsmittel des Lösemittels mit Hilfe von Wasserdampf. Dieser muß zusammen mit den Dämpfen des ausgetriebenen Lösemittels im Luftkühler kondensiert werden. Dieses Verfahren hat somit den Nachteil, daß neben dem Lösemittel ständig große Mengen Wasser im System vorhanden sind. Das Lösemittel kann daher nicht ohne weiteres für weitere Reinigungsprozesse verwendet werden, sondern es muß stets vom Wasserdampf mit dem damit verbundenen Aufwand getrennt werden.

Aus der DE-PS 36 09 587 ist ebenfalls eine Vorrichtung zur Rückgewinnung von Lösemittelgasen bekannt. Bei diesem Verfahren wird Ware mit Hilfe eines Luftstroms getrocknet, der durch einen Ventilator im Kreislauf über einen Behandlungsbehälter, einen Luftkühler und einen Lufterhitzer geführt wird. Nach Bedarf kann ein Adsorber in den Kreislauf eingeschaltet werden. Hierbei ist vorgesehen, daß der Adsorber in Umlaufrichtung des Luftstroms gesehen nach dem Ausgang des Behandlungsbehälters in den Kreislauf einschaltbar ist. Bei diesem Verfahren wirkt es sich nachteilig aus, daß die aus dem Behandlungsbehälter Lösemittel beladene Luft direkt dem Adsorber zugeleitet wird. Hierdurch kommt es zu einer relativ schnellen Erschöpfung des Adsorptionsmittels. Außerdem weist die aus dem Behandlungsbehälter kommende Luft eine erhöhte Temperatur auf, so daß es während der Adsorption auch zu einer Desorption infolge der Wärmeeinwirkung kommt.

Schließlich ist aus der DE-OS 34 12 007 eine Anlage zur Reinigung von Werkstücken mittels eines flüssigen Lösemittels bekannt, die so betrieben wird, daß während einer Trocknungsphase der Kondensator gekühlt, die Heizvorrichtung eingeschaltet und die Aktivkohle durch die heiße umgewälzte Luft regeneriert wird. Während einer Adsorptionsphase wird bei eingeschaltetem Kondensator und abgeschalteter Heizvorrichtung der umgewälzten Trocknungsluft der restliche Lösemitteldampf durch die Aktivkohle entzogen. Auch bei dieser Anlage erweist es sich als nachteilig, daß die Heizeinrichtung unmittelbar vor dem Adsorber angelegt ist. D.h., bei dieser Anlage muß stets auf der heißen Adsorberschicht adsorbiert werden. Selbst wenn der Heizer ausgeschaltet ist, wird dieser noch vom Spülgas durchströmt, so daß es zu einer optimalen Abkühlung bei dieser Anordnung nicht kommen kann. Außerdem wird bei diesem Verfahren während des Regenerierens und Adsorbierens stets parallel gespült. Die Folge hiervon sind lange Spülzeiten und eine schlechte Regeneration des Adsorptionsmittels. Außerdem ist es während der Adsorptionsphase nicht möglich, eine Nachtrocknung zu erreichen.

Die vorliegende Erfindung hat sich nunmehr die Aufgabe gestellt, eine Anlage zum Reinigen von Werkstücken mittels Lösemitteln in einem Behandlungsraum unter gleichzeitiger Rückgewinnung der Lösemittel, bestehend aus einem Spülgaskreislauf, in dem der Behandlungsraum, ein Kondensator zum Abscheiden des im Spülgasstrom enthaltenden Lösemittels, ein Adsorber und ein Gasaufheizer liegen, zur Verfügung zu stellen.

Diese Aufgabe wird dadurch gelöst, daß der Adsorber bezogen auf die Strömungsrichtung des Spülgases während der Adsorptionsphase hinter dem Kondensator angeordnet ist.

Der Adsorptionskreislauf besteht aus einem Adsorber, einer Leitung für die Zufuhr von Regenerationsgas und die Abfuhr von Spülgas, einem aus mindestens einem Kühler und einem Abscheider bestehenden Kondensator, einem Kreislaufgebläse und einer Leitung zur Führung des Kühlmittels im Kreislauf. Erfindungsgemäß bevorzugt wird eine Anlage, die zwei Kühler enthält. Hierbei wird der Vorkühler mit Kühlturmwasser betrieben und der Kühler der zweiten Stufe mit Kaltwasser beaufschlagt.

Die Besonderheit der erfindungsgemäßen Anlage liegt darin, daß in den Adsorptionskreislauf ein Kondensationskreislauf integriert ist. Dieser Kreislauf nutzt die Kühler, den Abscheider und das Kreislaufgebläse des Adsorptionskreislaufes. Zusätzlich enthält der Kondensationskreislauf einen Behandlungsraum, in dem die Reinigung und Reaktion vor sich geht. In den Behandlungsraum können beispielsweise Werkstücke eingebracht werden, die z.B. mit Ölen oder Fetten kontaminiert sind. Bei dem Behandlungsraum kann es sich aber auch um einen konventionellen Chemie- oder Bioreaktor handeln, an den die erfindungsgemäße Anlage angeschlossen ist. Die mit der erfindungsgemäßen Anlage ausgerüsteten Reaktoren können dann jeweils nach Abschluß der Reaktion entsorgt werden.

Der Behandlungsraum kann parallel zum Adsorber oder mit ihm in Reihe geschaltet sein.

Vor dem Kühler der erfindungsgemäßen Anlage kann eine Umgehungsleitung zur Abzweigung eines Teilstroms des lösemittelhaltigen Gases angebracht sein. Diese Umgehungsleitung mündet nach dem Kühler wieder in die Hauptleitung. Zwischen Abzweigung und Einmündung der Umgehungsleitung ist in der Hauptleitung ein Ventil angeordnet, das in Abhängigkeit von Prozeßbedingungen geöffnet und geschlossen wird. Gegebenenfalls kann dieses Ventil auch mit zeitabhängiger Steuerung betätigt werden. In der Umgehungsleitung ist ebenfalls ein Ventil zur Steuerung des Gas-Lösemittelstroms angebracht. Die Umgehungsleitung kann zwischen Kühler und Abscheider oder hinter dem Abscheider in die Hauptleitung wieder einmünden.

Mit der erfindungsgemäßen Anlage lassen sich insbesondere Werkstücke reinigen. Hierbei wird zunächst im Kondensationskreislauf ein Lösemittel-Gas-Gemisch über mindestens einen Kondensationskühler und einen Tropfenabscheider fortwährend durch einen Behandlungsraum geführt. Das Gas kann über einen Adsorber geführt werden, bevor es in den Behandlungsraum gelangt. Ebenso kann der Adsorber auch parallel zum Behandlungsraum geschaltet sein. Das Gas-Lösemittel-Gemisch wird dann jeweils dem Adsorber zugeführt, wenn der Lösemittelgehalt genügend abgesenkt Gewöhnlich wird bei einem Gehalt von 100 g/m³ auf Adsorption umgeschaltet. Bei besonders hohen Konzentrationen ist es erfindungsgemäß zweckmäßig, das Lösemittel-Gas-Gemisch ständig mittels eines Gebläses über den Behandlungsraum zu führen und dabei fortwährend einen Teilstrom abzuzweigen und über einen Kühler mittels eines zweiten Gebläses in den Hauptkreislauf zurückzuführen. Auch hier wird nach erfolgter Konzentrationsabsenkung des Lösemittelgehaltes auf Adsorption umgeschaltet. Bei dieser Verfahrensvariante wird der Abscheidevorgang beschleunigt, ohne daß der Adsorptionskreislauf vergrößert werden muß.

Bei der erfindungsgemäßen Anlage wird bevorzugt, eine zweistufige Kühlanlage einzusetzen. Der erste Kühler wird in der Regel mit Kühlturmwasser betrieben und der zweite Kühler mit einer Kühlanlage rückgekühlt. Der Vorteil dieser Anordnung besteht darin, daß durch den Kühlturm eine Vorabkühlung erreicht wird und in der zweiten Stufe nur noch eine Restwärmemenge abgeführt werden muß. Durch diese Verfahrensweise kann der Bedarf an Kältemittel erheblich vermindert werden. Da Kühlmittel sehr teuer sind, kann die erfindungsgemäße Anlage zur Kostenersparnis beitragen. In der ersten Kühlstufe wird von 90 °C auf 30 bis 35 °C abgekühlt. In der zweiten Kühlstufe erfolgt dann eine Abkühlung auf 0 bis 20 °c. In der Regel kühlt der zweite Kühler auf 7 bis 13 °C ab. Bevorzugt werden Endtemperaturen von 10 °C. Durch diese Abkühlung kann ein Lösemittel-Gas-Gemisch mit einer Konzentration von 1000 g Lösemittel pro m³ auf weniger als 100 g Lösemittel pro m³ abgesenkt werden.

In bestimmten Zeitabständen muß das Adsorptionsbett regeneriert werden. Auch diese Regeneration kann in demselben System erfolgen. Da es sich um ein geschlossenes System handelt, ist eine Emission von lösemittelhaltiger Abluft zu keinem Zeitpunkt gegeben.

Die Regeneration umfaßt zwei Schritte:
1. Aufheizen des Adsorptionsbettes,
2. Kühlen des Adsorptionsbehälters.

Das Aufheizen des Adsorptionsbettes erfolgt mit Hilfe der Zufuhr eines aufgeheizten Gasstromes. Dieser Gasstrom wird durch einen in der Anlage angeordneten Gasaufheizer, der sich noch vor dem Adsorptionsbehälter befindet, erreicht. Dieser Gasaufheizer kann auch für den Kondensationskreislauf genutzt werden, wenn das in den Behandlungsbehälter gelangende Gas eine zu niedrige Temperatur aufweist. Durch Umkehr der Beladerichtung kann das Adsorptionsbett wieder abgekühlt werden.

Im folgenden werden die erfindungsgemäße Anlage und das erfindungsgemäße Verfahren unter Bezugnahme auf die Zeichnungen näher erläutert:
Figur 1 zeigt eine Schemaskizze der erfindungsgemäßen Anlage.

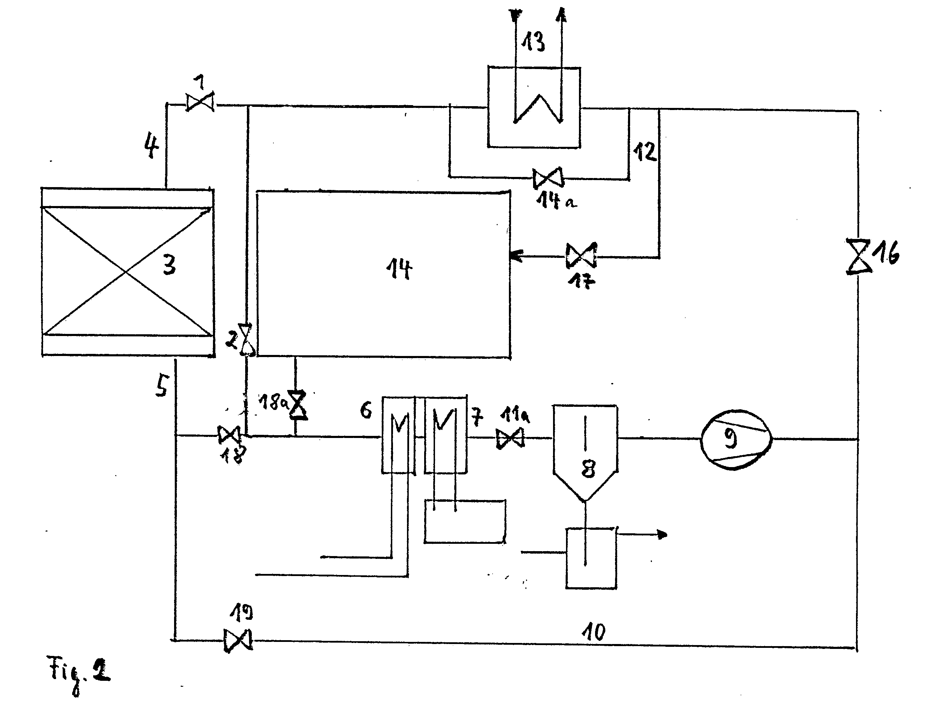

Figur 2 zeigt eine Anlage ohne Umgehungsleitung um den Kondensator.
Figur 3 zeigt die Anlage im Betriebszustand "Heizen".
Figur 4 zeigt den Betriebszustand "Kühlen".
Figur 5 zeigt eine Anlage, bei der zwei Gebläse eingebaut sind.

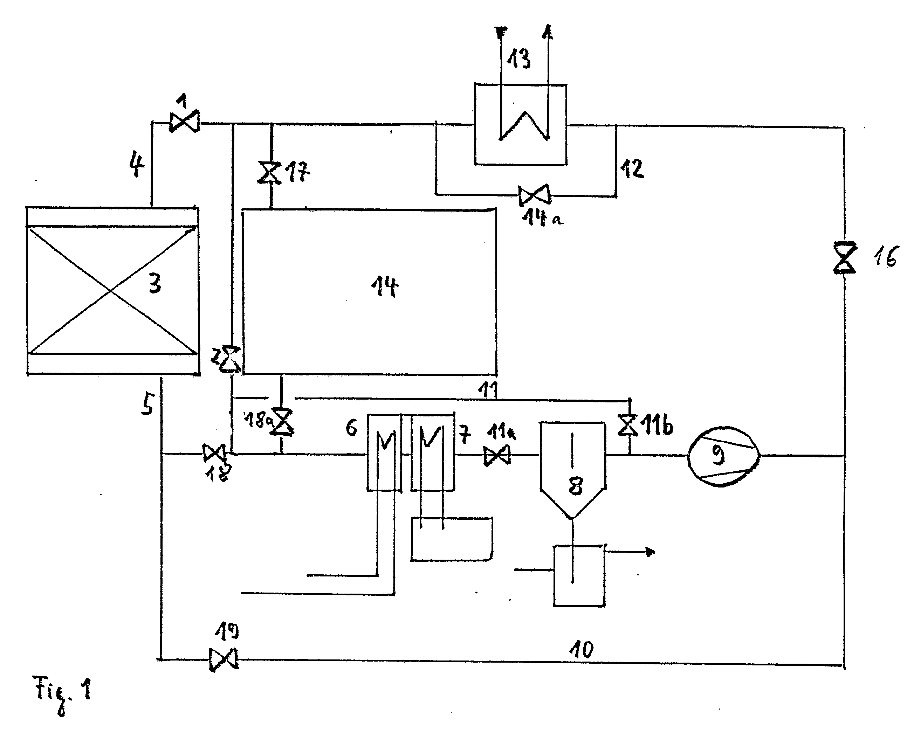

In der Anlage gemäß Figur 1 werden die zu reinigenden Werkstücke in einen Behandlungsraum 14 eingebracht und dort mit einem Lösemittel behandelt. Hierbei kann es sich um flüssige oder um dampfförmige Lösemittel handeln. Durch die Lösemittel werden die auf den Werkstücken vorhandenen Rückstände, z.B. Fette, entfernt. Diese Behandlung wird solange durchgeführt, bis alle Rückstände von den Werkstoffen entfernt sind und sich im Sumpf des Behandlungsbehälters gesammelt haben.

Nach Abschluß der Behandlung der Werkstücke mit Lösemittel muß dieses entfernt werden und die Werkstücke müssen getrocknet werden. Zu diesem Zweck wird in der Anlage gemäß Figur 1 ein Lösemittel-Gas- Gemisch ständig in einem Kondensationskreislauf geführt. Das Gas wird mittels eines Gebläses 9 in den Behandlungsraum 14 gepumpt. Hierbei kann das Ventil 14a geöffnet sein, so daß das strömende Gas den Gasaufheizer 13 nicht durchfließt. Alternativ kann auch vor dem Gasaufheizer eine Zuleitung zum Behandlungsraum 14 vorgesehen sein, so daß das Spülgas unter Umgehung des Gasaufheizers 13 direkt in den Behandlungsraum 14 fließt. Falls ein Anwärmen des zuströmenden Gases notwendig sein sollte, kann das Ventil 14a geschlossen werden und das Gas durch den Gasaufheizer 13 aufgewärmt werden. Das Ventil 17 in der Zuleitung zum Behandlungsraum 14 ist ebenfalls geöffnet. Das aus dieser Kammer ausströmende Lösungsmittel-Gas-Gemisch gelangt über das geöffnete Ventil 18a zu den Kühlern 6 und 7. Der Kühler 6 wird vorzugsweise mit Kühlturmwasser betrieben, während der Kühler 7 an eine konventionelle Kälteanlage angeschlossen ist. In den Kühlern wird das Lösemittel auskondensiert und in dem nachgeschalteten Tropfenabscheider in flüssiger Form zurückgewonnen. Das Gas wird in dem System solange im Kreis geführt, bis die Reaktion in dem Behandlungsraum 14 nahezu abgeschlossen ist. Hierbei werden vor allem Werkstücke (schöpfende Teile) besonders intensiv getrocknet, da das Spülgas praktisch lösemittel- und wasserfrei in die Reinigungskammer eintritt. Durch die neuartige erfindungsgemäße Anordnung wird die Trockenzeit signifikant verkürzt. Vergleichbare Zeiten konnten bisher nur mit der appartiv und energetisch wesentlich aufwendigeren Vakuumtrocknung erreicht werden.

Bei einem Lösemittelgehalt im Gas von weniger als 100 g/m$^3$ wird auf Adsorption umgeschaltet. Hierfür wird das Ventil 16 geschlossen und die Ventile 19 und 1 geöffnet. Über die Leitung 10 und die Zuleitung 5 wird das gekühlte Gas-Lösemittel-Gemisch dem Adsorber 3 zugeführt. Über die Leitung 4 verläßt gereinigtes Gas den Adsorber. Das den Adsorber verlassende Gas hat eine Lösemittelkonzentration von weniger als 20 mg/m$^3$ und eine Wasserkonzentration von weniger als 1 mg/m$^3$.

Alternativ zur zweistufigen Fahrweise kann die Adsorptionsstufe der Kondensationsstufe direkt nachgeschaltet werden. Die auf den Adsorber 3 gefahrenen Lösemittelkonzentrationen können durch Abmischung des hochbeladenen Spülgasstroms aus dem Behandlungsraum 14 mit gereinigtem Spülgas über Bypass 11 und Regelklappe 11b auf die Anforderungen der Adsorptionsstufe eingestellt werden.

Für die Adsorption sind insbesondere Molekularsiebe (Natriumaluminiumsilikate) geeignet, da sie aufgrund ihrer kristallinen Struktur mit genau definiertem Porendurchmesser die Möglichkeit bieten, spezifische Lösemittel selektiv herauszufiltern. Für jedes Lösemittel kann ein maßgeschneiderter Molekularsiebtyp gewählt werden. Solche Molekularsiebe sind beispielsweise in "Oberfläche-Surface" Nr. 4, 1986, S.T.P.P. Januar/Februar Vol 23, 1987, Seite 2928 und der europäischen Patentanmeldung 0215472 beschrieben. Die Auslegung der Adsorber erfolgt über definierte Beladeraten, abgestimmt auf die Betriebsparameter der Produktionsanlage wie Gasmenge und Lösemittelgehalt.

Während der Adsorptionsphase wird das Gas-Lösemittel-Gemisch ständig über den Kondensationskühler geführt, so daß hier es zu einer weiteren Verringerung des Lösemittelgehaltes kommt und stets gekühltes Lösemittel-Gas-Gemisch in den Adsorber gelangt. Das Ventil 14a ist so geschaltet, daß der Gasaufheizer nicht in Betrieb ist.

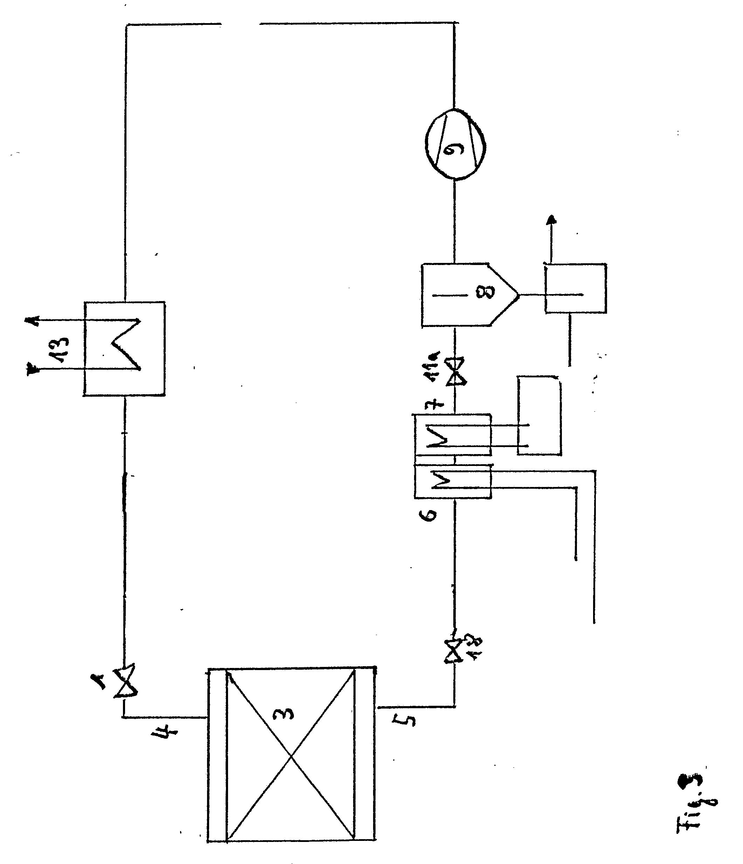

Die Regeneration des Adsorptionsbettes erfolgt ebenfalls dem erfindungsgemäßen geschlossenen System (vgl. Figur 3). Hierfür wird angewärmtes Gas, das im Gasaufwärmer 13 erhitzt worden ist, von oben dem Adsorptionsbett zugeführt. Durch das Gebläse 9 wird das Gas ständig im Kreislauf gefördert. Das Gebläse 9 ist vorzugsweise hinter dem Tropfenabscheider 8 angeordnet, kann aber auch an jeder anderen beliebigen Stelle des Kreislaufes sich befinden. In dem Gasaufwärmer 13 erfolgt eine direkte (elektrisch) oder indirekte (Dampf- oder Wärmeträgeröl) Erhitzung des Regenerationsgases auf eine Temperatur zwischen 40 und 250 °C. Das erhitzte Gas gelangt über eine Leitung in den Adsorptionsbehälter, so daß es von oben nach unten strömt und dabei das adsorbierte Lösemittel austreibt. Die Wirkung beruht darauf, daß mit steigender Temperatur sich die Bindekräfte des Lösemittels an das Adsorptionsmittel lösen und auf diese Weise das Regenerationsgas mit Lösemittel sich anreichert. In den nachgeschalteten Kühlern 6 und 7 wird das von dem Regenerationsgas aufgenommene Lösemittel auskondensiert und in dem nachgeschalteten Tropfenabscheider 8 in flüssiger Form zurückgewonnen. Das gekühlte Gas wird anschließend über das Kreislaufgebläse 9 wieder dem Gasaufheizer 13 zugeführt. Mit dem aufgeheizten Regenerationsgas wird dem Adsorptionsbett die erforderliche Desorptionsenergie zugeführt. Ist das Bett durchwärmt und das Lösemittel vollständig aus dem Adsorptionsbett herausgelöst wird wieder auf Kühlen geschaltet.

Durch eine Abzweigung vor dem Kühler wird erfindungsgemäß ein Teil des lösemittelhaltigen Regenerationsgasstroms abgezweigt, über eine Umgehungsleitung 11 geleitet hinter dem Kühler 8 dem Hauptstrom wieder zugeführt. Hierdurch wird erreicht, daß mehr Wärme dem System erhalten bleibt, weil nicht der gesamte lösemittelhaltige Gasstrom Kühler 6 bzw. 7 abgekühlt wird. Dadurch wird wiederum die Aufkonzentration des Gaskreislaufs mit kondensierbaren Lösemitteln beschleunigt und der Energieverbrauch insgesamt gesenkt.

Das Ventil 11b steuert die Menge des durch die Umleitung 11 strömenden lösemittelhaltigen Gasstroms in Abhängigkeit von der Temperatur des den Adsorber verlassenden Gases. Eine zusätzliche Regelungsmöglichkeit ist zwischen Abzweigung und Einmündung der Umgehungsleitung 11 in der Hauptleitung mit dem Ventil 11a geschaffen worden. Dieses Ventil kann entweder zeitabhängig oder in Abhängigkeit von der Temperatur des den Adsorber verlassenden Gases geregelt werden.

Das zurückgewonnene Lösungsmittel aus der Reinigung bzw. Reaktion und der Regeneration kann ohne Nachstabilisierung direkt der Produktionsanlage wieder zugeführt werden. Dadurch, daß in einer geschlossenen Anlage gearbeitet wird, ist das gewonnene Lösungsmittel kontaktwasserfrei. Demzufolge ist auch eine Nachbehandlung in einem Stripper nicht notwendig.

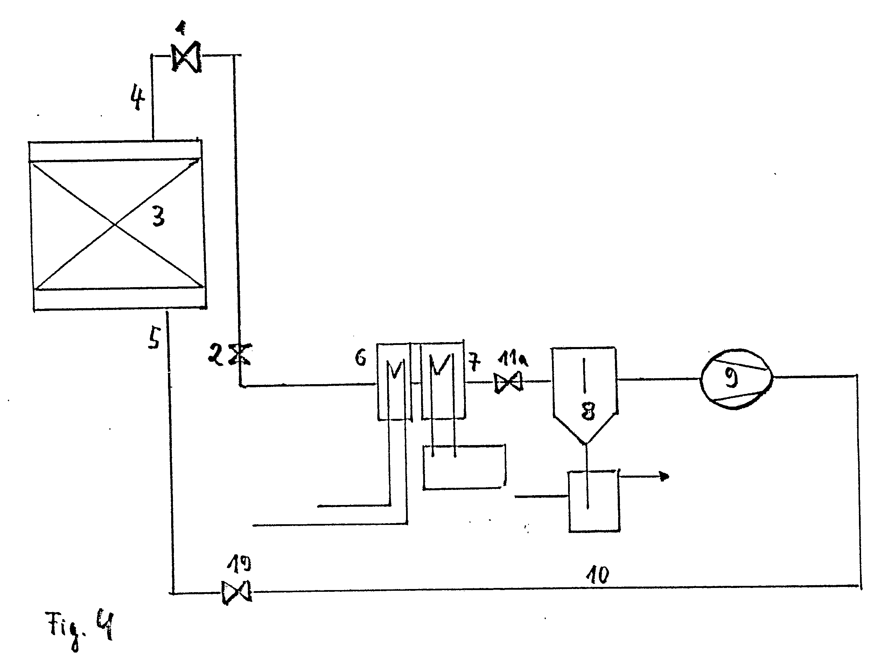

Während der Kühlphase sind die Ventile 1 und 2 geöffnet (vgl. Figur 4). Durch die geänderte Ventilschaltung wird der Adsorber in Beladerichtung angeströmt, d.h. von unten nach oben und gleichzeitig der Gasaufheizer umfahren. Durch diese Schaltung wird mit fortschreitender Kühlung des Bettes die in den Adsorber und den Rohrleitungen noch vorhandene Restkonzentration an Lösemitteln als erstes in der untersten Schicht des Adsorptionsmittels angelagert. Die Kühlphase ist zweitabhängig gesteuert und so ausgelegt, daß eine gute Kühlung und somit Adsorptionsfähigkeit der oberen Molekularsiebschicht im Bett gewährleistet ist.

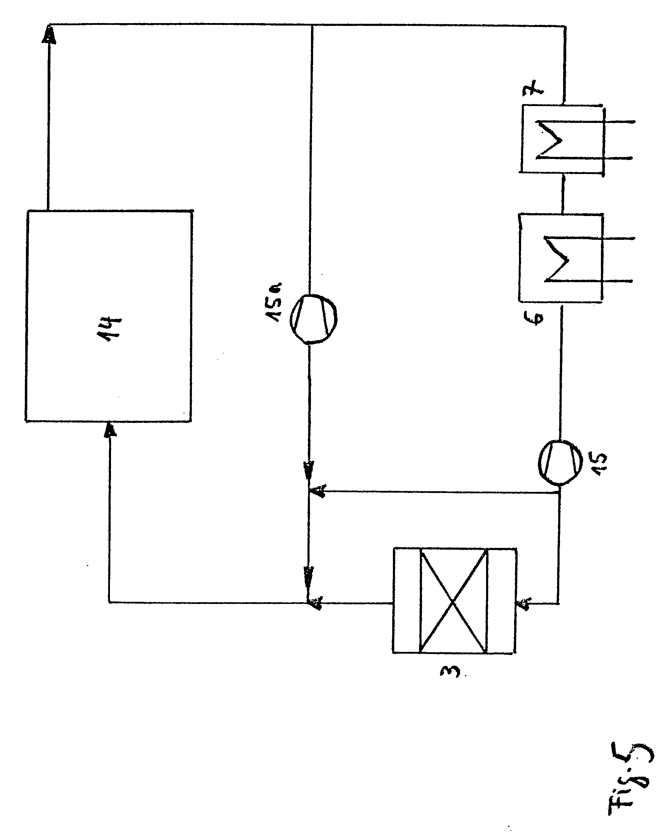

In Figur 5 ist eine weitere Ausführungsform der erfindungsgemäßen Anlage dargestellt. Diese Anlage enthält zwei Gebläse. Mittels des Gebläses 15a wird das Lösemittel-Gas-Gemisch standig über die Reaktions- und Reinigungskammer geführt. Ein Teilstrom wird von dem Hauptstrom fortwährend abgezweigt und mittels des Gebläses 15 über eine zweistufige Kühlanlage zurück in den Hauptstrom gefördert. Wenn die Konzentration an Lösemittel weit genug abgesenkt ist, wird der Teilstrom mittels des Gebläses 15 ber den Adsorber geleitet und erst dann wieder in den Hauptstrom zurückgeführt. Die Umschaltung von Kondensation auf Adsorption erfolgt in der Regel bei einer Konzentration von 100 g Lösemittel pro m³ oder weniger.

Die erfindungsgemäße Anlage läßt sich überall dort einsetzen, wo chargenweise arbeitende Prozesse durchgeführt werden, bei denen Lösemittel verwendet werden. Ebensogut ist die Anlage aber auch für den kontinuierlichen Betrieb geeignet. In diesem Falle werden vorzugsweise Doppelbettanlagen eingesetzt. Insbesondere eignet sich das erfindungsgemäße Verfahren zur Entsorgung von Reaktoren und Werkstücken. Ebenso ist die Anlage auch für Trockenreinigungsmaschinen, Metallentfettungsanlagen Anlagen zum Reinigen von elektronischen Leiterplatten, Lösemittelbehälter und ähnlichen Anlagen geeignet. Mit dem erfindungsgemäßen Verfahren lassen sich insbesondere Werkstücke kühlen und trocknen.

Da die erfindungsgemäße Anlage ein geschlossenes System ist das völlig luftdicht abgeschlossen ist, ist eine Nachbehandlung der wiedergewonnenen Lösemittel nicht erforderlich. Die Folge hiervon ist, daß keine Luftfeuchtigkeit in die Anlage gelangen kann, so daß Lösemittel frei von Kontaktwasser ist. Ferner kann das Lösemittel nahezu ohne Verluste im Kreislauf geführt werden.

Die Anlage arbeitet nahezu abluft- und abwasserfrei. Der zulässige MAK-Wert (maximale Arbeitsplatzkonzentration) liegt unter dem Schwellenwert von 12 ppm. Die Restlösemittelkonzentration in der Behandlungskammer beträgt nach dem Spülvorgang 10 bis 20 ppm.

Dadurch, daß die Kühler eine Doppelfunktion haben, nämlich Kondensation und Kühlung, ist der apparative Aufwand Vergleich zu konventionalen Anlagen erheblich geringer. Durch die nachgeschaltete 99,9 %-ige Tropfenabscheidung läßt sich eine optimale Kondensation erreichen. Optimiert wird die Kondensation auch dadurch, daß in der erfindungsgemäßen Anlage eine Rückvermischung vermieden wird.

In der erfindungsgemäßen Anlage sind Adsorptions- und Regenerationsphase völlig voneinander getrennt. Beide Prozesse können daher optimiert werden. Der Adsorber ist so ausgelegt, daß nach 8 oder 16 Stunden regeneriert wird. Denn durch die erfindungsgemäße Anordnung ist gewährleistet, daß ein Minimum an Lösemitteln auf den Adsorber geht. D.h., die ohnehin schon sehr langen Standzeiten von Natriumaluminiumsilikaten werden durch die erfindungsgemäße Anordnung noch zusätzlich verlängert. Die Belastung der Molekularsiebe ist darüber hinaus auch deshalb sehr gering, weil das System völlig wasserfrei arbeitet. Die Folge hiervon ist auch eine Minimierung der Spülzeiten. Durch die Umkehr der Strömungsrichtung beim Heizen bzw. Kühlen läßt sich darüber hinaus eine zusätzliche Optimierung der Regeneration erreichen. Hierdurch werden auch die Beladekapazitäten der Molsiebe ständig auf dem Optimum gehalten, so daß am Ausgang des Adsorbers stets sehr niedrige Spülgaskonzentration auftreten. Durch die Nachschaltung des Heizers können darüber hinaus besonders intensiv getrocknete Werkstücke erhalten werden.

**Patentansprüche**

1. Anlage zum Reinigen von Werkstücken mittels Lösemittels in einem Behandlungsraum (14) unter gleichzeitiger Rückgewinnung der Lösemittel, bestehend aus einem Spülgaskreislauf, in dem der Behandlungsraum (14), ein Kondensator (6, 7, 8) zum Abscheiden des im Spülgasstrom enthaltenden Lösemittels, ein mit Molekularsieb gefüllter Adsorber (3) und ein Gasaufheizer (13) liegen, **dadurch gekennzeichnet,** daß der Adsorber (3) bezogen auf die Strömungsrichtung des Spülgases in der Adsorptionsphase hinter dem Kondensator (6, 7, 8) angeordnet ist.

2. Anlage nach Anspruch 1, **dadurch gekennzeichnet,** daß der Adsorber (3) zwischen dem Kondensator (6, 7, 8) und dem Gasaufheizer (13) liegt, wobei Mittel zur Umkehrung der Spülgasstromes vorgesehen sind, so daß in der Adsorptionsphase der Spülgasstrom über die Kühleinrichtung (6, 7) des Kondensators und in der Desorptionsphase der Spülgasstrom über den Gasaufheizer (13) zum Adsorber (3) fließt.

3. Anlage nach Anspruch 1, **dadurch gekennzeichnet,** daß der Adsorber (3) in Reihe oder parallel zum Behandlungsraum (14) liegt und über eine Ventilkombination an den aus Behandlungsbehälter (14), Kondensator (6 7, 8) und Gasaufheizer bestehenden Kreislauf derart angeschlossen ist, daß in der Desorptionsphase unter Umgehung des Behandlungsbehälters (14) der Adsorber mit in dem Gasaufheizer (13) erhitztem lösemittelfreiem Gas durchströmt wird, wobei das aus dem Adsorber (3) herausgespülte Lösemittel ständig in dem Kondensator (6, 7, 8) kondensiert wird, und

daß während der Kühlphase der Adsorber im Gegenstrom zur Strömungsrichtung des Spülgases während der Heizphase unter Umgehung des Behandlungsbehälters (14) und des Gasaufheizers (13) und unter ständiger Kühlung mittels des Kondensators (6, 7, 8) durchströmt wird.

4. Anlage nach einem der Ansprüche 1 bis 3, **dadurch gekennzeichnet,** daß der Gasaufheizer (13) mit einer Umgehungsleitung (12) versehen ist, so daß das Spülgas nicht den Gasaufheizer (13) durchströmt, wenn nicht geheizt wird.

5. Anlage nach einem der Ansprüche 1 bis 4, **dadurch gekennzeichnet,** daß der Kondensator aus mindestens einem Kühler (6, 7) und einem Tropfenabscheider (8) besteht.

6. Anlage nach einem der Ansprüche 1 bis 5, **dadurch gekennzeichnet,** daß der Kühler zweistufig ausgelegt ist.

7. Anlage nach Anspruch 6, **dadurch gekennzeichnet,** daß der erste Kühler mit Kühlturmwasser beaufschlagt wird und der zweite Kühler über eine Kälteanlage rückgekühlt wird.

8. Anlage nach einem der Ansprüche 1 bis 7, **dadurch gekennzeichnet,** daß vor dem Kühler (6, 7) eine Umgehungsleitung (11) zur Abzweigung des Lösemittel-Gas-Gemisches von der Hauptleitung abgezweigt ist und die Umgehungsleitung (11) nach dem Kühler (6, 7) wieder in die Hauptleitung mündet.

9. Anlage nach einem der Ansprüche 1 bis 8, **dadurch gekennzeichnet,** daß das Adsorptionsbett des Adsorbers (3) aus Natriumaluminiumsilikat besteht.

10. Verfahren zum Reinigen von Werkstücken mittels Lösemittels in einer Anlage nach einem der Ansprüche bis 9, **dadurch gekennzeichnet,** daß die in dem Behandlungsraum (14) behandelten Werkstücke nach dem .Reinigungsvorgang mit nahezu lösemittelfreiem und getrocknetem Gas, wobei der Feuchtigkeitsgehalt des Gases kleiner als 1 $mg/m^3$ ist, zur schnelleren und intensiveren Trocknung der Werkstücke beaufschlagt werden, weil sich ein Partialdruckgefälle für eine Verdunstung von verbleibenden flüssigen Lösemitteln an den Werkstücken bei niedrigen Temperaturen wesentlich unterhalb des Siedepunktes ausbildet.

Fig. 1

Fig. 2

EP 0 331 611 A2

Fig. 3

Fig. 4

EP 0 331 611 A2

Fig.5